# EUROPEAN PATENT APPLICATION

(11) **EP 0 625 721 A1**
(43) Date of publication of application: **23.11.1994**
(21) Application number: 94303491.8
(22) Date of filing: 16.05.1994
(51) Int. Cl.: G02F 1/1335

(54) **Liquid crystal display**

(30) Priority: 18.05.1993 GB 9310190; 23.06.1993 GB 9312988
(71) Applicant: NEGRETTI AVIATION LIMITED, Wimborne, Dorset BH21 4EL (GB)
(72) Inventor: Symons, Jeremy William, Fareham, Hampshire PO16 0SN (GB); Young, Robert William, Lymington Hampshire SO41 OTY (GB)
(74) Representative: Skone James, Robert Edmund

(57) **Abstract**

A liquid crystal display comprising a layer of superposed front (5) and rear (6,6') polarising elements, liquid crystal material (3) and means (4) for selectively energising the material to define variable indicia. The display may be a twisted nematic display with two parallel polarisers (5,6) separated by a liquid crystal layer, or a Heilmeir display with a single fixed polariser and a polarising liquid crystal layer. Fixed indicia (8,71) are defined by one of the polarising elements or are provided (22) between the liquid crystal material and the rear polariser.

## Description

The invention relates to liquid crystal displays.

It is a common requirement with liquid crystal displays to provide certain "fixed" information such as lettering/scales etc on the display for use in conjunction with the variable data defined by the display elements. Conventionally, the fixed information on negative mode displays has been provided by printing on the front face of the liquid crystal display or on the back of a glass situated in front of the LCD. However, one of the problems with this arrangement is that in order to view the display correctly under certain conditions, for example at night, it is necessary to illuminate the LCD from the front in order to view the fixed information while the LCD is also lit from the back to allow the variable information to be seen. This is particularly complex.

In accordance with one aspect of the present invention, a liquid crystal display comprises a layer of superposed front and rear polarizing elements, a liquid crystal material and means for selectively energising the material to define variable indicia, wherein one of the polarising elements defines further, fixed indicia visible from the front of the display.

In this aspect of the invention, we have provided an alternative to the conventional system of printing the fixed information on the front of the LCD by causing one of the polarising elements to define the shapes of the required, fixed information. Typically, this would be achieved by laying down one of the polarising elements in a continuous form and then selectively removing parts of the polarising element to define the required shapes. Alternatively, the polarising element could be provided in the shaped form.

In a first embodiment, the display is a conventional negative mode twisted nematic (T.N.) display with two parallel polarisers, separated by a liquid crystal layer. The first polariser polarises light in a particular direction (eg. horizontal), the liquid crystal layer (in its normal, deactivated state) rotates the angle of polarisation of the light by 90°, and therefore the light is blocked by the second, horizontal polariser. When the liquid crystal layer is activated (by applying a voltage across it), it loses this property, and the light passes through the parallel polarisers unhindered. Typically, the rear polariser has cut-away portions which allow light to pass through, whether or not the element is activated. This provides fixed white indicia on a black background (i.e. a negative mode display).

In a second embodiment, the display comprises a negative mode Heilweir display. This has a single fixed front or rear polariser, and a layer of liquid crystal fluid with a dye added. In its normal state, the dyed liquid crystal layer acts as a polarising film in a direction defined by alignment layers on the surrounding glass. The polarising direction is set at 90° to the fixed polariser, causing a normally black display with fixed white indicia in the cut away portions of the fixed polariser.

Not only does this invention avoid the problems of providing both front and back lighting since the front lighting can now be omitted, but also the fixed information or characters have a similar appearance to the variable information thus making the display more acceptable to the eye.

An alternative approach to providing fixed indicia is disclosed in US 4656466. Liquid crystal is provided between crossed polarized polarisers. Therefore, when the display element is not actuated, light passes through the display (due to the fact that the liquid crystal rotates the angle of polarisation of the light by 90°). A fixed reference numeral is printed on the rear polariser, and reflects light so that it is visible when the element is not actuated (the numeral may be a different colour to the display). However, this approach is not suitable for a display in which the polarisers are parallel (i.e. in which the display is black when the element is not actuated).

In accordance with a second aspect of the present invention a liquid crystal display comprises superposed front and rear polarising elements arranged such that their polarising directions are substantially parallel, and between which is provided liquid crystal material and means for selectively energizing the material to define variable indicia, wherein fixed indicia are provided between the liquid crystal material and the rear polariser.

The fixed indicia depolarise the light passing through the display, whereby the fixed indicia are permanently visible.

It has been found that this approach in which the fixed indicia are provided behind both the front polariser (ie the polariser nearest the eye in use) and the liquid crystal material again allows the fixed information to have a similar appearance (contrast and brightness) to the variable indicia.

In some cases, the fixed indicia could be printed directly onto the rear polarising element. In other cases, the fixed information could be printed onto a transparent (eg glass) element positioned between the rear polarising element and the liquid crystal material or on a separate transparent sheet between the glass element and the rear polarising element. Combinations of these arrangements are also possible. Both aspects of the invention are particularly suited to use in negative mode displays.

Some examples of liquid crystal displays according to the present invention will now be described with reference to the accompanying drawings, in which:-
Figure 1 is a schematic cross-section through a first example of a display according to the first aspect of the invention;
Figure 2 illustrates one example of fixed indicia in the rear polariser of Figure 1;
Figure 3 illustrates a display according to the present invention using a second example of the rear polarizer;
Figure 4 illustrates part of the moving pointer display shown in Figure 3;
Figure 5 is a schematic, exploded view of part of the display shown in Figure 3;
Figures 6A and 6B illustrate digital displays generated by the display in Figure 3;
Figure 7 illustrates a second example of a display according to the first aspect of the invention; and
Figure 8 is a cross-section through an example of a display according to the second aspect of the invention;

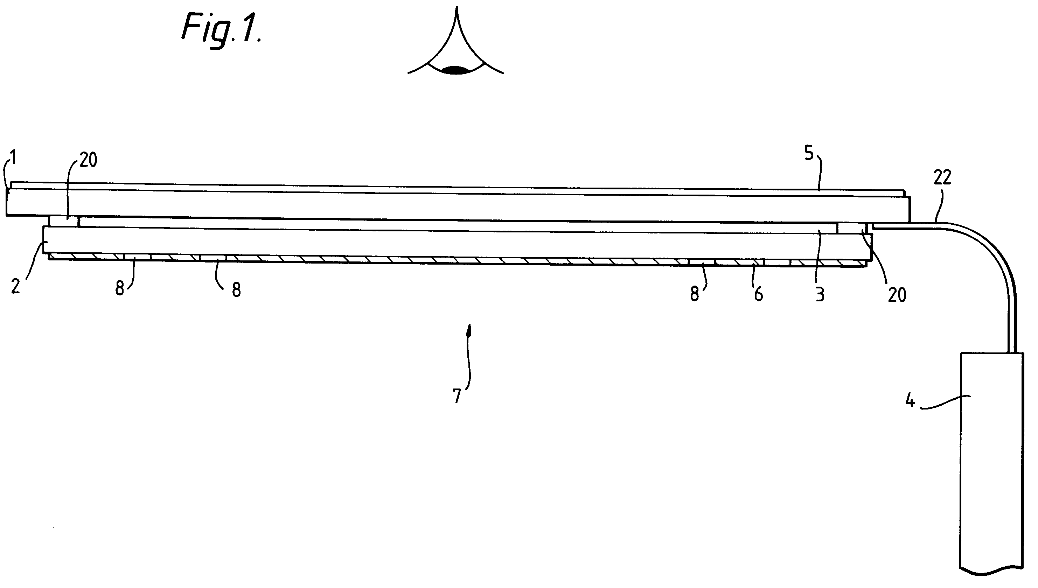

The liquid crystal display (LCD) shown in Figure 1 comprises a pair of glass plates 1,2 between which is provided a micron thick layer of a liquid crystal material 3, contained by a seal 20. The facing surfaces of the glass plates 1,2 carry conductive plates (or electrodes) shaped to conform to respective display elements of a variable display, and wires 22 connecting the plates to remote control circuitry 4. Typically, the plates and wires will be etched onto the glass plates 1,2 using a conventional photoresist technique.

Respective front and rear polarisers 5,6 with their polarising directions parallel are positioned on the front and rear surfaces of the glass plates 1,2. Light passing through the rear polariser 6 will be polarised in a first direction, then rotated by 90° by the liquid crystal layer (when no voltage is applied to the electrode) so that the light is then blocked by the front polariser 5. When a voltage is applied, the angle of polarisation is not rotated by the liquid crystal, and therefore passes through the front polariser. Hence the display is normally black, with actuated elements appearing white.

The construction described so far is of a conventional liquid crystal display which, when viewed from the front and lit from the back in the direction of an arrow 7 can be selectively energised to provide a variable character display. Alternatively, the display may be front lit, with a reflective rear surface.

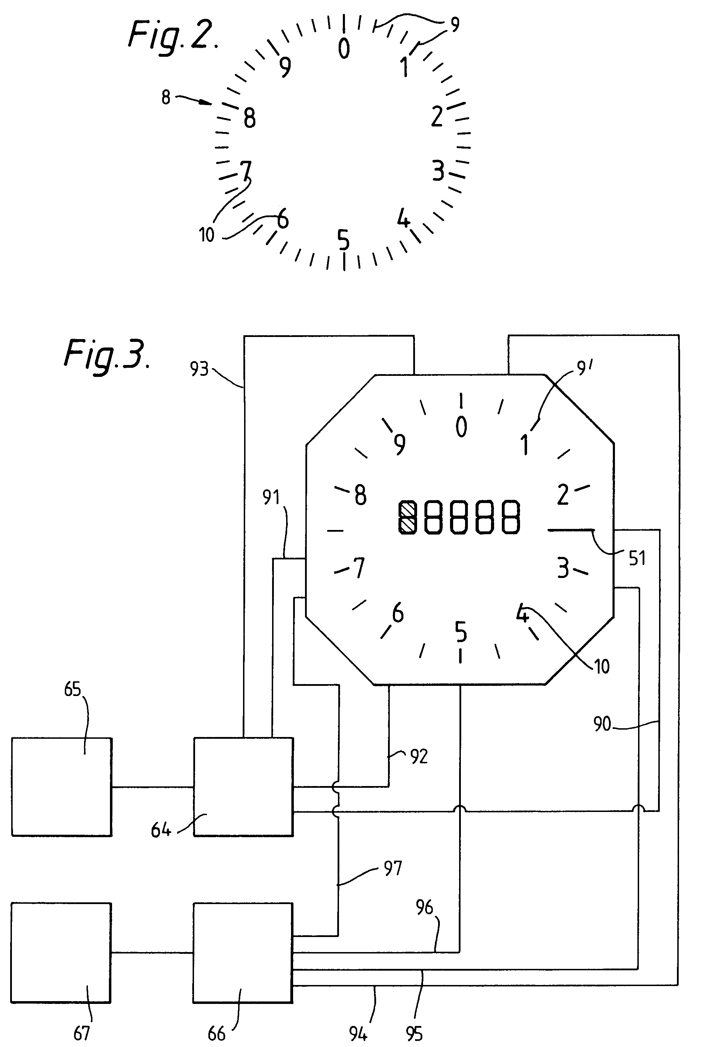

In this example, however, the rear polariser 6 has had certain regions 8 cut away to define fixed indicia in the form of a scale 8 (Figure 2) having lateral indicating lines 9, and numerals 10. The indicia in Figure 2-4 are shown as black on white for reasons of clarity. In reality, the indicia will be white on a black background.

In use, the fixed information is viewed through the front polariser 5 and liquid crystal material 3 and has the similar appearance (contrast and brightness) to the variable information generated by the LCD.

The fixed indicia are typically employed in a display such as the scale markings shown in Figure 3.

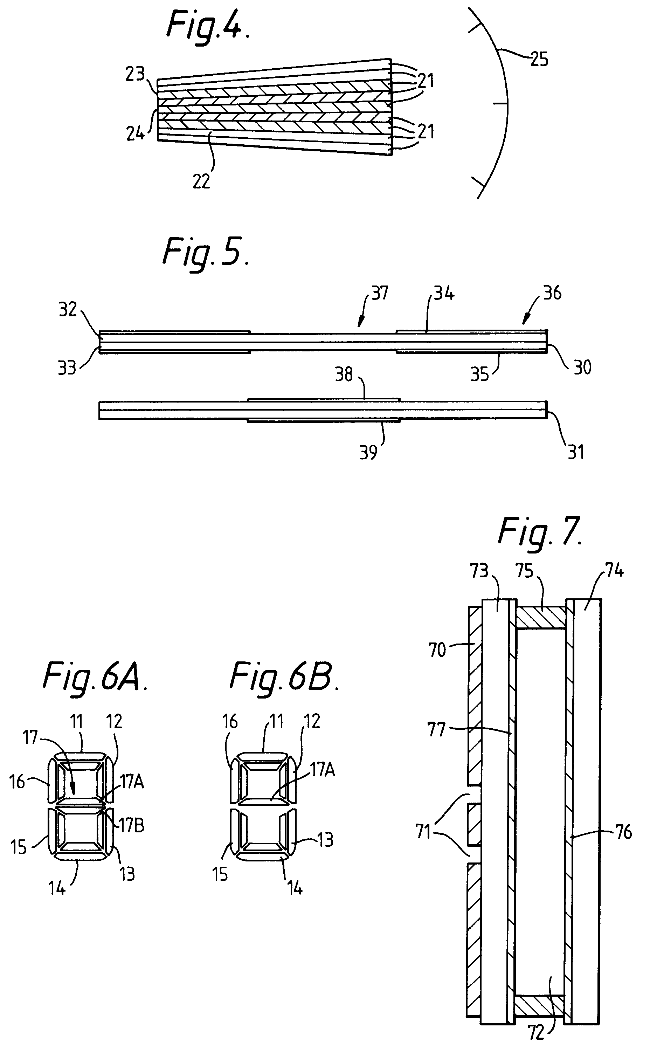

A moving pointer 51 points to the fixed scale 9',10. Typically, the moving pointer is of the type shown in Figure 4, and described in our copending European patent application of even date entitled "Display System" (Agent's reference 30/3923/02). Figure 4 shows part of the moving pointer display. A set of elongate, closely packed display elements 21 are provided extending fully around a circle (not shown). In use, the pointer defined by the actuated elements 21 can be moved clockwise, as seen in Figure 4, by actuating the next element 21 in the sequence (indicated at 22) and deactuating the trailing segment (indicated at 23). It will be noted that the four elements between the element 22 and the element 23 remain actuated during this process. The result gives the appearance of a smoothly moving pointer. The appearance of the pointer can be increased still further by deactuating the central element giving a central marker to replace the conventional point. In the case of Figure 4, this would be the element indicated at 24.

As shown in Figure 5 the display system shown in Figure 3 comprises a pair of liquid crystal display members 30,31. This is also described in our copending European patent application of even date entitled "Display System" (agent's reference 30/4252/02). Each member 30,31 is of the polarising type. That is, each comprises a pair of glass sheets, for example sheets 32,33 between which is provided a micron thick layer of a liquid crystal material. The facing surfaces of the glass sheets 32,33 carry conductive plates shaped to conform to the display elements and wires connecting the plates to remote drive circuitry (not shown). Typically, the plates and wires will be etched onto the glass plates 32,33 using a conventional photoresist technique. The member 30 has on its upper and lower surfaces respective annular polarisers 34,35 which polarise light in parallel directions. The polarisers 34,35 are provided in a peripheral region 26 of the member 30 while a central region 37 is left uncovered so that the member 31 is viewable through the central region 37. Fixed indicia are provided in the rear polariser 35.

The central region of the member 31 carries parallel polarisers 38,39 and is of a similar construction to the member 30. Fixed indicia may be provided in the rear polariser 39.

In use, the two members, 30,31 are sandwiched together and coupled to respective drive circuits which enable the display elements in the members 30,31 to be actuated. Each electrode in the analogue display is connected by wires 90-93 to the control unit 64 (Figure 3), which controls the display in response to signals from detector 65. The digital display in Figure 3 is connected by wires 94-97 to a control unit 66, and detector 67.

Figures 6A and 6B illustrate the numerals in the digital display. As can be seen in Figure 7A, each display element 11-17 is formed of two sub-elements, for example sub-elements 17A, 17B. If one of the sub-elements fails, for example the sub-element 17B, when the drive electronics attempts to cause the display of the numeral "8" the resultant display (Figure 7B) will still have the appearance of the numeral 8 due to actuation of the display element 17A.

Figure 7 shows a second embodiment of the invention in a Heilmeir Display. Polariser 70, with cut-away portions 71 is provided only on the front or rear surface of the display. A liquid crystal layer 72 is held between two glass plates (73,74) and a seal 75. The liquid crystal contains a black dye which constitutes a long chain molecule which aligns with the liquid crystal molecules and causes the layer to act as a polariser. The direction of polarisation is controlled by polyimide alignment layers 77 which are rubbed in a particular direction, and cause the liquid crystals to line up in that direction. The fixed polariser 70 is arranged at 90° to the liquid crystal polariser, causing a normally black display. When the liquid crystal is activated, the liquid crystals line up in the direction of the electric field, and the layer loses its polarising properties.

Therefore, this provides a second type of negative mode display, with white fixed indicia 71.

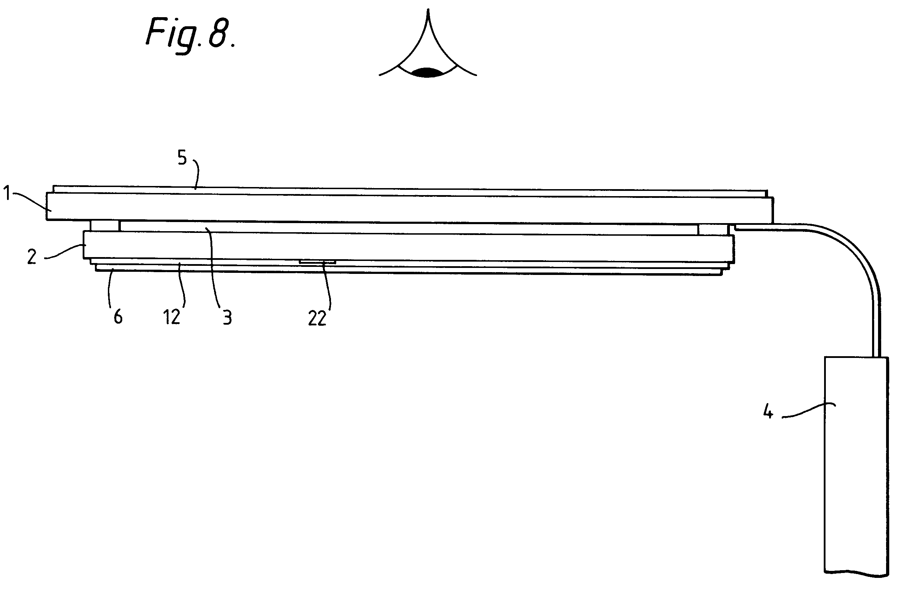

Figure 8 illustrates a display according to a second aspect of the invention in which the rear polariser 6' has a continuous form but an additional transparent, plastics sheet 12 is interposed between the glass plate 2 and the rear polariser 6'. In this case, the fixed information, for example a scale similar to the scale 8 shown in Figure 2, is printed in white ink 22 onto the transparent sheet 12 in the required position and again will be viewed through the front polariser 5 and liquid crystal material 3. The layer of white ink causes the polarised light to be depolarised, and hence becomes visible when viewed from the front. Again, this may be used with either a front-lit or a back-lit display.

The other elements of the device shown in Figure 6 are the same as those shown in Figure 1.

The display may comprise a mixture of fixed indicia provided by cut away portions of rear polariser, and indicia provided by printed ink, as shown in Figure 6.

## Claims

1. A liquid crystal display comprising a layer of superposed front (5) and rear (6) polarizing elements a liquid crystal material (3) and means (4) for selectively energising the material to define variable indicia (51), wherein one of the polarising elements defines further, fixed indicia (10,11) visible from the front of the display.

2. A display according to claim 1, wherein the fixed indicia (10,11) are defined by cut away portions (8, 71) in the polarising element.

3. A display according to any one of the the preceding claims, wherein the liquid crystal layer rotates the angle of polarisation of light by 90°, and is disposed between two polarizing layers (5,6) which polarise the light passing through the display in parallel directions.

4. A display according to claim 1 or 2, wherein the liquid crystal layer comprises a polarising layer (72), and constitutes one of the polarising elements.

5. A liquid crystal display comprising superposed front (5) and rear (6') polarising elements arranged such that their polarising directions are substantially parallel, and between which is provided liquid crystal material (3) and means (4) for selectively energizing the material to define variable indicia (51), wherein fixed indicia (22) are provided between the liquid crystal material and the rear polariser.

6. A display according to claim 5, wherein the fixed indicia (22) are provided on the rear polarising element (6').

7. A display according to claim 5 or claim 6, wherein the display includes a pair of transparent members (1,2) between which the liquid crystal material is provided, the fixed indicia (22) being provided on a surface of the rear transparent member (2).

8. A display according to any of claims 5 to 7, wherein the display includes a pair of transparent members (1,2) between which the liquid crystal material (3) is provided, the fixed indicia (22) being provided on an additional, transparent member (12) between the rear transparent member (2) and the rear polarising element (6').

9. A display according to any of claims 5 to 8, wherein the fixed indicia (22) depolarise the light passing through the display.

10. A liquid crystal display according to any of claims 1 to 4, and any of claims 5 to 9.

11. A display according to any of the preceding claims, wherein the display is a negative mode display.
